# EUROPEAN PATENT APPLICATION

(11) **EP 4 546 637 A1**
(43) Date of publication of application: **30.04.2025**
(21) Application number: 23206276.0
(22) Date of filing: 26.10.2023
(51) Int. Cl.: H02P 5/74, H02P 21/22, H02P 21/00, H02M 7/493

(54) **MULTI-CHANNEL PARALLEL DRIVES**

(71) Applicant: Hamilton Sundstrand Corporation, Charlotte, NC 28217 (US)
(72) Inventor: KULSANGCHAROEN, Ponggorn, Solihull (GB); AL-KARAGHOULI, Ali Khalid, Solihull (GB); DINU, Andrei, Leicester (GB)
(74) Representative: Dehns

(57) **Abstract**

There is provided herein a system for providing power to one or more loads. The system comprises a central controller (360, 460) configured to output a speed demand for one or more loads; and a plurality of power converters (301, 302, 401, 402) arranged in a parallel configuration with each other and configured to provide power to the one or more loads. Each power converter (301, 302, 401, 402) comprises a speed control loop (310, 410) configured to calculate a local current demand based at least in part on an output speed error between the speed demand of the one or more loads and a measured speed of the one or more loads; a torque/current control loop (320, 420) configured to calculate an output voltage demand based at least in part on the local current demand of its respective speed control loop; and a module (340) configured to modulate the output voltage of an inverter (350) based on the output voltage demand from the torque/current control loop.

## Description

### FIELD

This invention relates generally to the field of multi-channel drives, and the control thereof.

### BACKGROUND

Electronic control architectures are provided with power converters (e.g., motor drives) that form an electrical circuit which accepts an input (e.g., AC or DC) and generates an output (e.g., AC or DC) of a different voltage. The development of such power converters is a significant part of the development of a new control architecture, program or system. It is envisioned that standardised power converters could significantly reduce development costs, by providing the ability for one or more loads to be controlled using multiple power converters.

To facilitate wide power requirement ranges of the one or more loads, it may be necessary to use a plurality of power converters operating in parallel. Mutualised or multiplexed power converter architectures become more relevant as the number of electronic components increases. This is the case, for example, in the aircraft industry as more electronically controlled components are used.

In such systems, a plurality of power converters may be interfaced to one or more electrical loads through a switch or switch matrix that can reconfigure the connection between electrical loads and power converters. In the case of an aircraft, certain loads may not be used simultaneously during a flight or at the same point in time, such as a landing gear actuator and thrust reverser actuator. As such, these components can in theory be powered by the same power converter, with the switch reconfiguring the connection accordingly.

The benefit of a combined or multiplexed approach is the potential reduction of weight and increase of drive availability compared to conventional architectures.

To take the maximum advantage of the combined or multiplexing concept (in particular the latter), paralleling control architectures for motor drives is a critical technology, which enables large loads to be powered by the parallel connection of multiple drives. This avoids having to dimension one motor drive for maximum load power, for example.

Solutions for providing parallel motor drives should be aimed at reducing weight, for example of the various components used within the architecture. It has also been found that the use of scalable and modular solutions may be important in enabling motor drive inverters to operate in standalone or a parallel configuration to a variable number of motor drives (e.g., two or more drives in parallel).

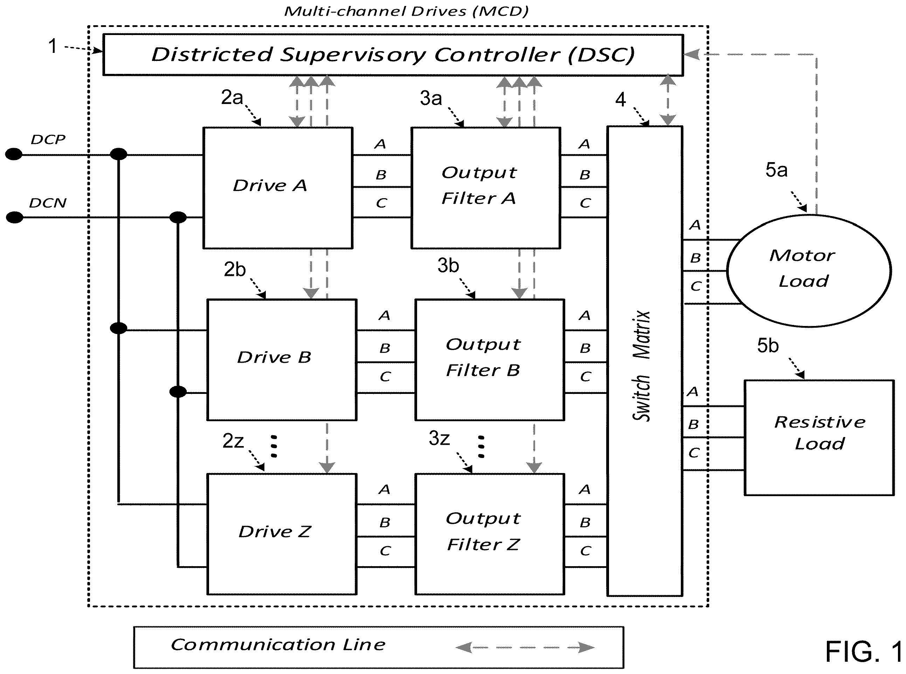

One example architecture that is utilised so as to allow for multiplexing of various power converters is a multi-channel drive (MCD) system, such as the one shown in Figure 1. Such an MCD architecture is a very flexible architecture because it can be controlled and managed by a districted supervisory controller 1 (DSC) to configure any drive channels 2a, 2b, ... , 2z to supply power to multiple loads 5a and 5b through the switch matrix 4 depending on the demand. The output filters 3a, 3b,... , 3z allow the system to electrically parallel two or more drives 2a, 2b, 2z to deliver more power to a single load.

Such architectures may use synchronous reference frame control, which is known in the art (also called "D-Q control" or Field Oriented Control). Using such a control mechanism, the voltage and current can be converted into a reference frame that rotates synchronously with a voltage vector (e.g., by Park Transformation) so that three-phase time-varying signals are transformed into DC signals. Using "D-Q currents" (direct and quadrature currents) provides a convenient way of representing the output current of the motor drive, and analysing the system. By utilising such control, it is possible to align the current vector with the Q-axis of a rotating DQ reference frame, in order to ensure maximum motor torque production for a given current.

In such MCD systems, it is desirable to improve the dynamic speed response in MCD configuration (e.g. the ability for the system to react to a change in demand from the load(s)), minimise steady state error of the MCD in all load conditions, and to ensure that the provided current is equally shared between the paralleled motor drives.

### SUMMARY

According to a first aspect, there is provided a system for providing power to one or more loads. The system comprises a central controller configured to output a speed demand for one or more loads; and a plurality of power converters arranged in a parallel configuration with each other and configured to provide power to the one or more loads. Each power converter comprises a speed control loop configured to calculate a local current demand based at least in part on an output speed error between the speed demand of the one or more loads and a measured speed of the one or more loads; a torque/current control loop configured to calculate an output voltage demand based at least in part on the local current demand of its respective speed control loop; and a module configured to modulate the output voltage of an inverter based on the output voltage demand from the torque/current control loop.

The central controller may be configured to calculate a global current demand based upon the local current demands calculated by each of the power converters, and transmit the global current demand to each of the power, and each speed control loop may be further configured to calculate its local current demand based at least in part on a proportional feedback signal of the global current demand.

In this way, there is provided an architecture providing "nudge control" in the speed control loop, thereby enabling improved dynamic speed response in the multi-channel drive configurations, minimized steady-state speed error of the paralleled multi-channel drives in all load conditions, and is very effective against the low-speed high-torque load condition. Furthermore, this is achieved whilst ensuring balanced current sharing between drives, and increasing robustness to communication failures. If the communication lines are down and the average Q-axis current demand is unavailable, the controller can revert back to be like a discharge-term architecture.

Each torque/current control loop may be configured to calculate its output voltage demand based on the global current demand from the central controller. In doing so, the architecture may make use of a similar "nudge" control in the torque/current control loop, improving performance in multi-channel drive configurations.

In this way, according to a first example, there may be provided a system for providing power to one or more loads. The system comprises a central controller configured to output a speed demand for one or more loads; and a plurality of power converters arranged in a parallel configuration with each other and configured to provide power to the one or more loads. Each power converter comprises a speed control loop configured to calculate a local current demand based at least in part on an output speed error between the speed demand of the one or more loads and a measured speed of the one or more loads; a torque/current control loop configured to calculate an output voltage demand based at least in part on the local current demand of its respective speed control loop; and a module configured to modulate the output voltage of an inverter based on the output voltage demand from the torque/current control loop; wherein the central controller is configured to calculate a global current demand based upon the local current demands calculated by each of the power converters, and transmit the global current demand to each of the power, and each speed control loop is further configured to calculate its local current demand based at least in part on a proportional feedback signal of the global current demand.

Each local current demand may comprise a local Q-axis current demand and a local D-axis current demand, and the global current demand may be a global Q-axis current demand, and wherein the local Q-axis current demand may be calculated based at least in part on the output speed error between the speed demand of the one or more loads and the measured speed of the one or more loads, and the proportional feedback signal of the global Q-axis current demand. In this way, the architecture may advantageously make use of DQ control.

Each local D-axis current demand may be calculated at least in part from the measured motor speed, and may be calculated in order to take into account field weakening.

Each output voltage demand may comprise an output Q-axis voltage demand and an output D-axis voltage demand, the output Q-axis voltage demand may be calculated at least in part based on the respective local Q-axis current demand of its respective speed control loop, and the output D-axis voltage demand may be calculated at least in part based on the respective local D-axis current demand of its respective speed control loop.

The system may further comprise a module configured to convert the voltage demand from the DQ domain to a three phase voltage domain for the module configured to modulate the output voltage of the inverter.

Each output voltage demand may be further calculated based on a feedforward term that is proportional to the measured speed of the one or more loads. The measured motor speed of the one or more loads may be scaled by an associated gain that is set equal to motor back EMF gain in order to provide the feedforward term. Such a system may further improve the MCD control performance during configuration changes by implementing the proportional feedforward voltage demand term, which is independent of the global D-axis and Q-axis voltage demands.

The central controller may configured to instruct one or more of the plurality of power converters to come online in order to meet the speed demand.

In this way, according to a second example, there may be provided a system for providing power to one or more loads. The system comprises a central controller configured to output a speed demand for one or more loads; and a plurality of power converters arranged in a parallel configuration with each other and configured to provide power to the one or more loads. Each power converter comprises a speed control loop configured to calculate a local current demand based at least in part on an output speed error between the speed demand of the one or more loads and a measured speed of the one or more loads; a torque/current control loop configured to calculate an output voltage demand based at least in part on the local current demand of its respective speed control loop and a feedforward signal that is proportional to the measured speed of the one or more loads; and a module configured to modulate the output voltage of an inverter (350) based on the output voltage demand from the torque/current control loop. The central controller may be configured to instruct one or more of the plurality of power converters to come online in order to meet the speed demand.

Such a system may further improve the MCD control performance during configuration changes by implementing the proportional feedforward voltage demand term, which is independent of the global D-axis and Q-axis voltage demands and also independent of the "nudge-term".

As would be appreciated, the system of the first aspect may be combined with the system of the second aspect, so as to provide the architecture of the first aspect, with the feedforward term of the second aspect. Such a system may therefore not only provide improved dynamic speed response in the multi-channel drive configurations, minimized steady-state speed error of the paralleled multi-channel drives in all load conditions, and is very effective against the low-speed high-torque load condition, but also be robust to configuration changes when one or more of the power converters come online.

The measured speed of the one or more loads may be scaled by an associated gain that is set equal to motor back EMF gain in order to provide the feedforward term.

The central controller may be configured to calculate a global current demand based upon the local current demands calculated by each of the power converters, and transmit the global current demand to each of the power converters, and each speed control loop may be further configured to calculate its local current demand based on a proportional feedback signal of the global current demand.

Each torque/current control loop may be configured to calculate its output voltage demand based on the global current demand from the central controller.

The central controller may be configured to calculate a global voltage demand based upon the local voltage demands calculated by each of the power converters (, and transmit the global voltage demand to each of the power converters, and each torque/current control loop may be further configured to calculate its local voltage demand based at least in part on a proportional feedback signal of the global current demand.

According to a second aspect, there is provided a method of providing power to one or more loads. The method comprises receiving a speed demand for the one or more loads, calculating, by each of at least one power converters, a respective local current demand based at least in part on an output speed error between the speed demand of the one or more loads and a measured speed of the one or more loads; calculating, by each of the at least one power converters, a respective output voltage demand based at least in part on the local current demand of the speed control loop; and modulating, by each of the at least one power converters, the output voltage of a respective inverter, based on the respective output voltage demand.

Each respective local current demand may be calculated based at least in part on a proportional feedback signal of a global current demand, the global current being calculated based upon the local current demands.

The respective output voltage demand may be calculated based on a feedforward term that is proportional to the measured speed of the one or more loads.

One or more further power converters may be instructed to come online in order to meet the speed demand of the one or more loads. Each of the further power converters may be configured to perform the same steps as the power converter(s) that are already online.

### BRIEF DESCRIPTION OF THE DRAWINGS

Certain examples of the disclosure will now be described, by way of example only, with reference to the accompanying drawings, in which:
Figure 1 shows an example multi-channel drive system;
Figure 2 shows an example control architecture utilising a discharge term in the speed control loop;
Figure 3 shows a control architecture utilising a "nudge term" in the speed control loop;
Figure 4 shows an alternative control architecture utilising a "nudge term" in the speed control loop;
Figure 5 shows results from testing an architecture utilising a discharge term in its speed control at 1 krpm under a no-load condition;
Figure 6 shows results from testing an architecture utilising a "nudge term" in its speed control at 1 krpm under no-load condition;
Figure 7 shows results from testing an architecture utilising a discharge term in its speed control at 1 krpm under a load condition;
Figure 8 shows results from testing an architecture utilising a "nudge term" in its speed control at 1 krpm under a load condition;
Figures 9 and 10 show results from switching from two drives to one drive, and vice versa during testing of an architecture at 3krpm, under 5Nm load;
Figures 11 and 12 show results from switching from two drives to one drive, and vice versa during testing of an architecture at 1krpm, under 5Nm load;
Figures 13 and 14 show results from switching from two drives to one drive, and vice versa during testing of an architecture at 6krpm, under 5Nm load;
Figure 15 shows an alternative control architecture with a feedforward voltage demand.

### DETAILED DESCRIPTION

Whilst the description herein may refer to only a specific number of paralleled power converters (e.g. motor drives) configured to be able to drive one or more common load(s), it would be appreciated that the teaching herein could be applied to any number of loads, and their motor drives. For example, there could be three or more paralleled powered converters (e.g. motor drives) configured to drive (e.g. control or actuate) a common load.

It will be appreciated that references to motor drives in accordance with various embodiments herein could refer to any type of power converter, and the broadest aspects of the present disclosure are not intended to be limited to using motor drives, or providing a load in the form of a motor.

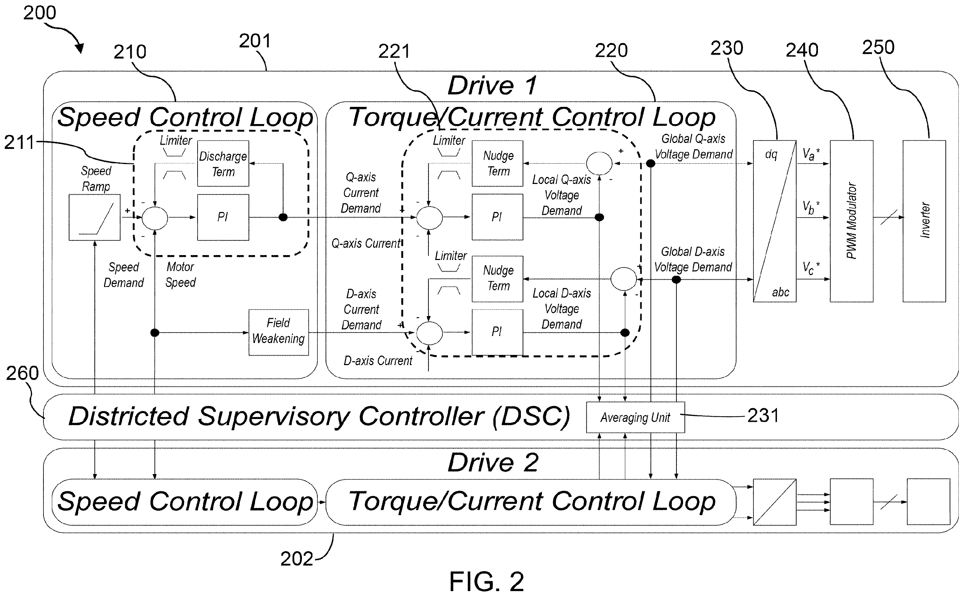

To enhance the paralleled drive operation, a distributed control architecture has been proposed which utilise the global voltage demand as described in EP3916990A1 and EP4024649A1, both of which are incorporated herein by reference and/or utilise a discharge term within the speed control loop as described in EP4243274A1, which is incorporated herein by reference. Such a control architecture utilising these methods has been implemented, for example as shown in Figure 2.

As can be seen in Figure 2, the distributed control architecture 200 comprises at least a first power converter (e.g. a motor drive) 201, and a second power converter (e.g. a motor drive) 202, with a central controller 260, such as a DSC. As would be appreciated, each power converter may comprise the same logic, whereas the Figures only show the details of the first power converter for ease of illustration.

Each power converter may include an inverter 250. The inverter 250 may be considered to convert DC power received by each power converter into an output voltage (e.g., a three-phase AC voltage) for powering/actuating one or more load(s). Whilst two motor drives 201, 202 are shown in Fig. 2, more could be provided as required, and as discussed herein.

As discussed above, the plurality of motor drives 201, 202 typically need some sort of common or centralised operation (e.g., control system) for example to synchronise their operation. Accordingly, the motor drives 201, 202 may be controlled centrally using the DSC 260 (e.g., processor or circuitry). The central controller 260 may be configured to control, for example, which motor drive(s) 201, 202 are to be used (e.g., selected as discussed above) at a particular time. The DSC 260 may achieve this by switching between the motor drives (e.g., the power inverters thereof) using, e.g., a modulation scheme or technique.

Each motor drive 201, 202 may include components or circuitry that form a speed loop 210 having as an input a reference speed (illustrated as a speed demand and speed ramp in the Figures), for example an angular speed demand ω_{ref,} and also a motor speed ωₘ (which may be measured or calculated).

The reference speed ω_{ref} would typically be given to all power converters operating in parallel, and could be set by the central controller (e.g. DSC) 260 or elsewhere (e.g., a flight control computer, or other component or module, e.g., having another control loop). For example, a flight controller may be commanding that a component moves by actuating to a certain position at a given speed. The speed loop 210 is configured to generate suitable current reference(s) (e.g. a local Q-axis current demand, and/or local D-axis current demand), which is then input into a torque/current loop 220 (described below) to regulate the output current of the motor drive, in effect regulating the speed of rotation of the motor. Although speed loops such as this are known in the art, the technology disclosed herein means we can retain this control while integrating a parallel system.

Each motor drive 201, 202 comprises a (local) torque/current control loop 220 that is configured to calculate a local voltage reference (e.g. local Q-axis voltage demand and/or local D-axis voltage demand) for the motor drive 201, 202 as discussed above. The torque/current loop 220 is configured to regulate the output current of the respective motor drive 201, 202, so as to ensure the motor drives 201, 202 operating in parallel work together adequately and effectively. That is, to generate the correct currents, the output voltage of the motor drive 201, 202 needs to be set correctly. The current loop 220 (and speed loop 210) are used to calculate the local voltage reference(s) (such as local Q-axis voltage demand, and/or local D-axis voltage demand). These voltage reference(s) are then converted from the DQ domain to the ABC (i.e. three phase voltage) domain by a conversion module 230, which may then be used as part of the modulation (e.g., to generate suitable modulation duty cycles). This is then used to generate the correct switching sequence of the motor drives 201, 202 (e.g., via the modulation technique or scheme) to facilitate this.

Any suitable method or type of modulation may be employed in the present disclosure. In particular, the modulation may comprise pulse width modulation ("PWM") such as space vector modulation ("SVM"). Each motor drive 201, 202 may include a modulation module 240 configured to control the synchronisation of the motor drive 201, 202, for example the synchronisation of a switching frequency of the modulation, e.g., using PWM or SVM.

The modulation (e.g., PWM or SVM) module 240 is configured to generate the appropriate signals (e.g., logic and/or switching signals) for the inverter 250 of the motor drive 201, 202 (e.g., gate drivers thereof) to provide a controlled commutation of the output voltages thereof, whilst regulating the output voltages/currents of each inverter 250 to maintain consistency between the motor drives 201, 202. Thus, the modulation module 240 may be configured to send suitable such signals to the inverter 250 that control the timings associated with the respective motor drive 201, 202 (e.g., the output voltages thereof) in use. Generation of the switching signals for the inverters 250 by each respective modulation (e.g., SVM) module 240 is facilitated by the use of the global voltage references.

Each motor drive 201, 202 may be a single power converter and the circuitry/components thereof may be located on a single circuit board (e.g., a single printed circuit board or "PCB"). The circuit boards (or "blades") holding the motor drives 201, 202 could be similar (or substantially identical), such that they comprise the same interface for communicating with the DSC 260. In this manner, the motor drives 201, 202 could be easily scaled (e.g., from using two motor drives 201, 202 to using three or more) without any modification of the motor drives 201, 202 or central controller 260.

A rack or similar structure could be used to connect a variable number of (e.g., between 2 and 20) motor drives 201, 202 to the central controller 160, in a similar manner to server racks, into which server blades can be inserted and removed easily depending on system requirements.

The current values of the three phases (i.e., the instantaneous inverter 250 output currents) may be measured and/or determined for use in the local current control loop 220 (see "Q-axis current"/"D-axis current" in the Figures). Suitable components or circuitry may be configured to determine the output currents. The output currents (e.g., phase currents) could be measured and/or determined using a current sensor, although any suitable technique could be used, with optionally a current sensor provided for each of the three phases.

The control architecture 200 supplements the PI control loops (such as those discussed above) with two additional control methods.

Firstly, the DSC 260 is configured to determine or calculate a global voltage reference for each of the q-axis and d-axis based on the local output voltage references from each of the paralleled motor drives 201, 202. The global voltage reference may be an average or sum of the local voltage references. The global voltage reference is then transmitted back to each local motor drive 201, 202, to be converted from the DQ domain to the ABC (i.e. three phase voltage) domain by conversion module 230, which may then be used as part of the modulation (e.g., to generate suitable modulation duty cycles). For example, the modulation elements may generate a suitable switching pattern for the inverters 250 based on the global voltage reference.

The control architecture 200 of Figure 2 thus utilizes a "nudge" algorithm 221 in the toque/current control loop 220. In this way, an additional proportional feedback control inserted in each current control loop for both the Q and D axes. The torque/current control loop 220 receives, at its input, the local Q-axis and D-axis current demands from the speed control loop, and calculates a respective local Q-axis and D-axis voltage demand based on their respective current error.

The calculated local voltage demands may be transmitted to an averaging unit 231 of DSC 231, which calculates respective global average demands (i.e. the respective average of each of the local voltage demands from each separate power converter). The global voltage demands are then fed back to their respective inputs of the torque/current control loop 220, and subtracted from their respective current error.

In this way, the "nudge term" is fed by the difference between the global (average) from the averaging unit 261 of the DSC 260, and the local voltage demand values, as can be seen in Figure 2. It would be appreciated, however, that the present invention may find use in architectures that do not make use of such a "nudge" feedback loop.

The architecture 200 also utilizes a "discharge" algorithm 211 which is a proportional feedback control inserted in the speed control loop 210. In this way, the Q-axis current demand of the motor is calculated based on a speed error between the desired speed/speed demand indicated by the DSC and the measured speed of the motor, with a further feedback signal of the local output current demand subtracted from the speed error. The discharge term is fed by the local demand value, and is aimed at improving current sharing between paralleled motor drives.

The proportional nudge gain is normally set as a relatively smaller value compared to the discharge gain. Even so, the discharge-term control architecture produces a steady-state speed error particularly in low-speed high-torque load conditions. This mainly error occurs due to the discharge term affecting the speed error calculation at the input of the speed PI controller. The discharge term is used to balance the Q-axis current demands of the paralleled drives.

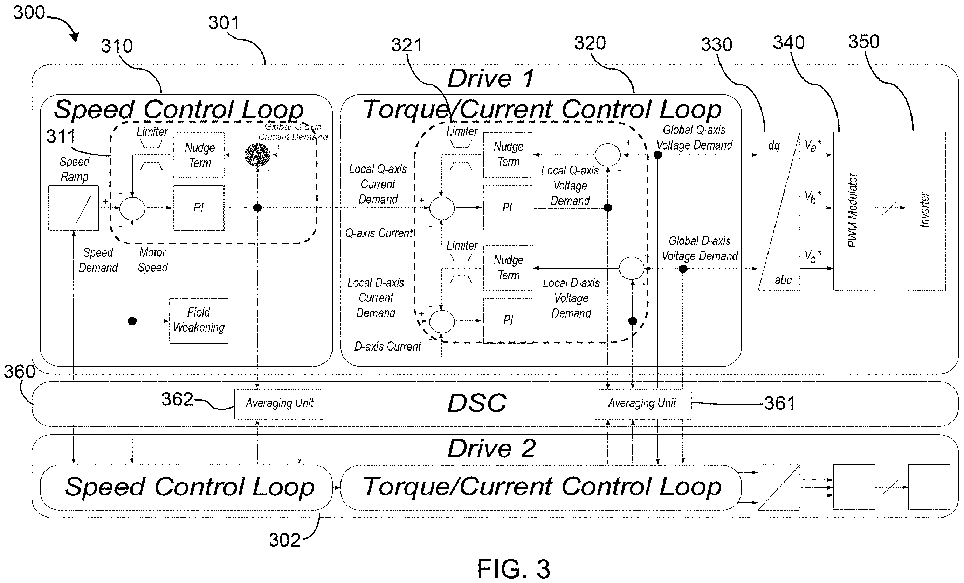

Figure 3 shows a control architecture 300 that aims to eliminate the issues with steady state errors outlined above, where like reference numerals indicate similar features to those shown in Figure 2. The control architecture 300 replaces the discharge term with a "nudge" algorithm 311 in the speed control loop 310. As detailed above, the speed control loop 310 receives a reference speed (or speed demand, as illustrated) from the DSC 360, and uses this reference speed so as to calculate an appropriate local current demand. The local current demand is then passed to the torque/current control loop 320 which then calculates voltage demand, for example as outlined above.

This can comprise producing a local Q-axis current demand as shown in Figure 3, which is then input into the torque/current control loop in order to provide a voltage demand, which may ultimately be provided as individual phase voltages Vₐ, V_{b}, V_{c} to each motor winding by a power inverter 350.

In this way, the DSC 360 may be configured to determine or calculate a global current demand for the Q-axis current, based on the local output current references from each of the paralleled motor drives 301, 302. The global current reference may be an average or sum of the local voltage references.

In order to implement a "nudge" algorithm 311 in the speed control loop 310, an additional proportional feedback control inserted in each current control loop for their respective Q axes current demand controllers.

The speed control loop 310 receives, at its input, the reference speed (e.g. speed demand) and the measured/calculated motor speed from the DSC 360, and calculates a respective local Q-axis axis current demand based on their respective speed error. The local D-axis current demand may be calculated based on the measured/calculated motor speed, optionally taking into account a certain degree of field weakening.

The calculated local Q-axis current demands may be transmitted to an averaging unit 362 of DSC 360, which calculates a global average current demand (i.e. the respective average of each of the local current demands from each separate power converter). The local current demand is then subtracted from the average global current demand, and the resulting difference is then scaled by a gain and fedback to the input of the speed control loop, and subtracted from the speed error from which the Q-axis local current demand is calculated.

In this way, each drive sends its locally calculated Q-axis current demand value to the DSC 360. Then the DSC 360, in averaging unit 362, calculates an averaged value of current demands, and sends it back to each drive as a global Q-axis current demand. The difference between the global and the local Q-axis current demands is fed to the nudge proportional controller 311, while the local Q-axis current demand is fed to the current control loop.

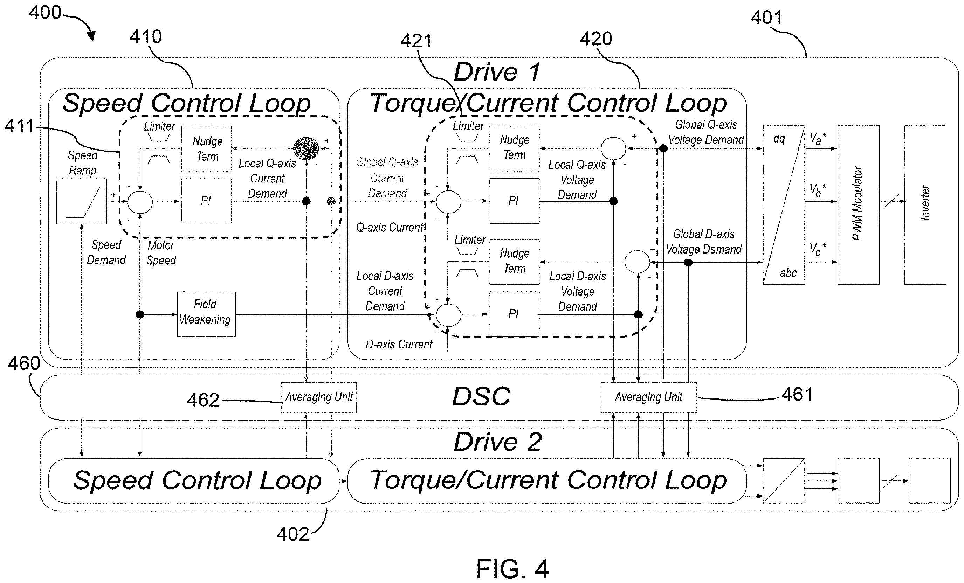

A similar control architecture 400 is provided as seen in Figure 4, again with like reference numerals to those shown in Figure 3. In that architecture, as opposed to the local Q-axis current demand being passed transmitted to the torque/current control loop, the global Q-axis current demand passed applied to the current control loop. Otherwise, the local Q-axis current demand is calculated in the same way as seen in Figure 3, and as described above.

As such, if the communication with DSC 430 fails and the global Q-axis demand is unavailable, the controller simply reverts to the discharge-term architecture, similar to that seen in Figure 2.

While the description herein is described with reference to two-level drives, it would be appreciated that the teaching herein is applicable for other multi-level power converter topologies because in case of multi-level drives, the multi-level capacitor voltages are controlled locally by each drive controller.

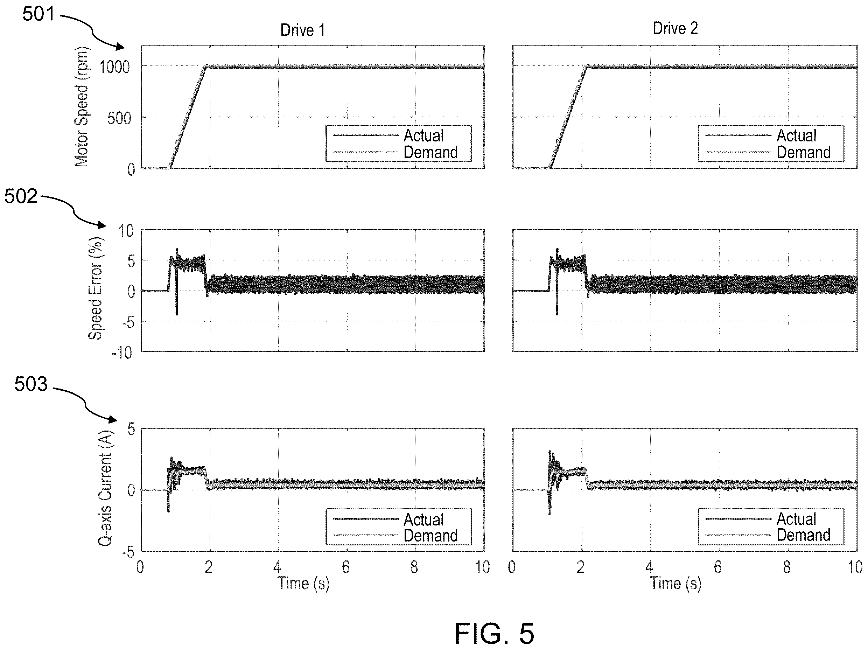

Control architectures with the speed control discharge term (as seen in Figure 2) and with the introduction of the "nudge term" (i.e. a speed control loop that utilises feedback from the average global current demand as seen in Figures 3 and 4) have been evaluated experimentally using two paralleled drives and one motor load (similarly to the arrangement seen in Figure 1). The tested control architectures have an identical control gain parameter setting (e.g. same speed loop PI gains, current loop PI gains, same proportional gain for discharge and nudge gain). The experiment is conducted at the mechanical speed of 1krpm under no-load condition and then later with a load condition of 8Nm (≈800W). The results of such testing may be seen in Figures 5 to 8.

Figure 5 shows testing of an architecture utilising a discharge term in its speed control, such as architecture 200. The top plots 501 depicts for each of two paralleled drives the actual, and demanded motor speeds against time. The middle plots 502 show the speed error of each drive, and the bottom plots 503 shoes the actual and demands Q-axis currents in both paralleled drives, with the discharge term at 1 krpm under no-load condition

It can be seen that, under the no-load condition, the discharge-term controller produces about 5% speed error during the speed ramp-up period, and <1% during the steady-state period as shown in plots 501 and 502.

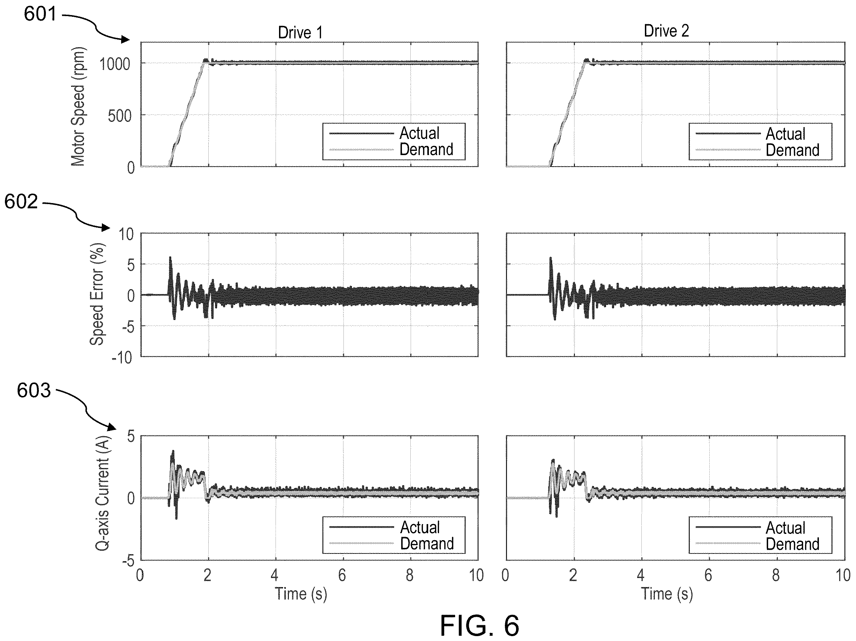

The results of a similar test using a "nudge term" architecture, such as the architecture 300 seen in Figure 3, can be seen in Figure 6. The top plots 601 depicts for each of two paralleled drives the actual, and demanded motor speeds against time. The middle plots 602 show the speed error of each drive, and the bottom plots 603 shoes the actual and demands Q-axis currents in both paralleled drives, with the nudge term at 1 krpm under no-load condition

Whilst the nudge-term controller produces momentary 5% speed error during the speed ramp-up period and the speed error reduces toward 0% during the steady-state period as shown in plots 602 and 603 of Figure 6. In addition, the nudge-term controller produces very responsive Q-axis current demand as shown in plot 603, which explains the reduced speed error during the speed ramp up period.

The discharge-term controller can act only as a balancer, which helps minimize instability between the two drives by damping the oscillation of the Q-axis current demand as shown in plots 503 of Figure 5. However, unlike the nudge-term controller, the discharge-term controller does not have access to the average Q-axis current demand (i.e. global) so, when implementing this controller, the chosen proportional gain value is a compromise between high values to improve stability or low gain values to improve dynamic response (at the expense of stability).

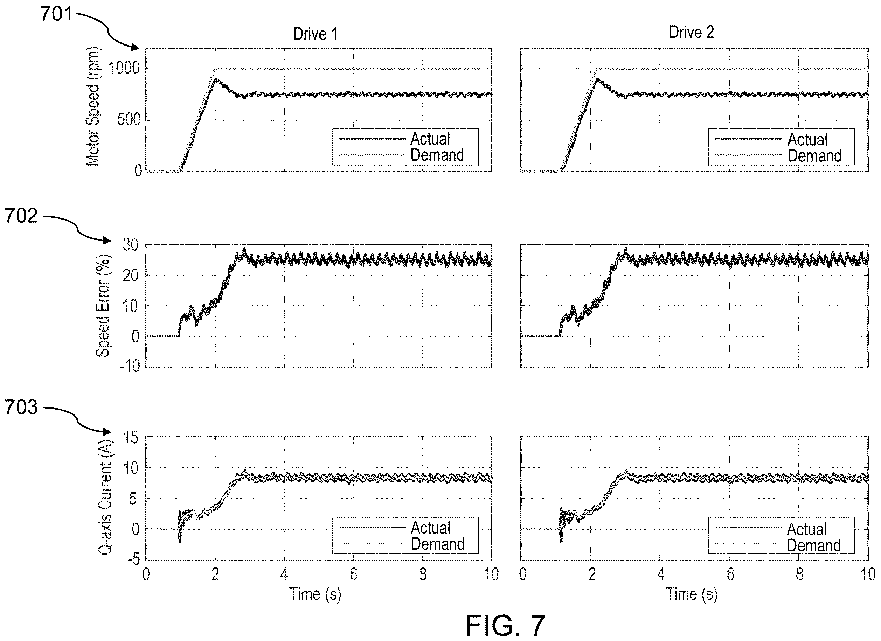

Figure 7 shows testing of an architecture utilising a discharge term in its speed control, such as architecture 200. The top plots 701 depicts for each of two paralleled drives the actual, and demanded motor speeds against time. The middle plots 702 show the speed error of each drive, and the bottom plots 703 shoes the actual and demands Q-axis currents in both paralleled drives, with the discharge term at 1krpm under the load condition of 8Nm.

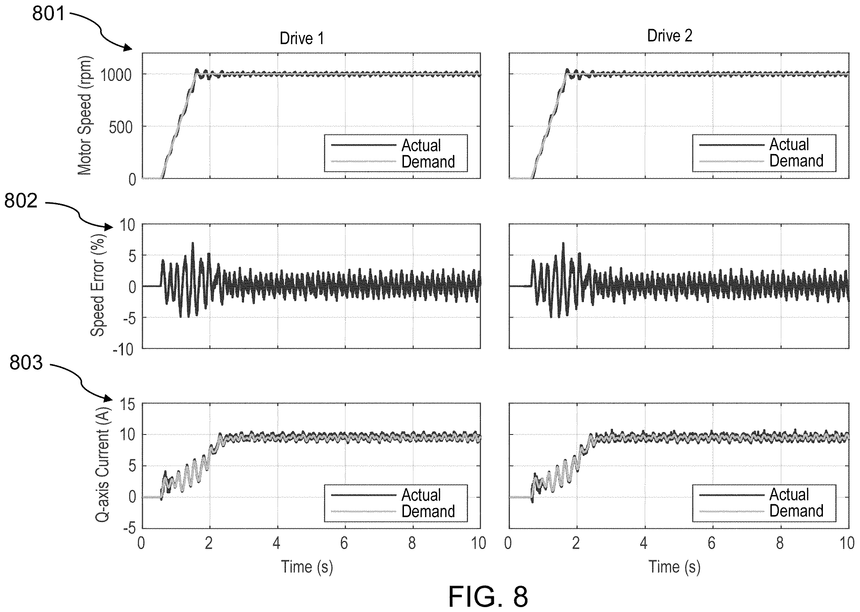

The results of a similar test using a "nudge term" architecture, such as the architecture 300 seen in Figure 3, can be seen in Figure 8. The top plots 801 depicts for each of two paralleled drives the actual, and demanded motor speeds against time. The middle plots 802 show the speed error of each drive, and the bottom plots 803 shoes the actual and demands Q-axis currents in both paralleled drives, with the nudge term at 1krpm under the load condition of 8Nm.

Under the load condition, the discharge-term controller produces about 10% speed error during the speed ramp-up period and the error keeps increasing to about 25% during the steady-state period as shown in plots 701 and 702 in Figure 7. The nudge-term controller limits the speed error to 5% during the speed ramp-up period and reduces the error toward 0% during the steady-state period as shown in plots 801 and 802 of Figure 8.

As such, it has been show that speed error problems become more pronounced with a discharge-term controller under high load conditions. Whilst, in a discharge-term control strategy, it is possible to implement a look-up table to boost the speed demand and compensate for the speed drops due to the increasing load torque, such a method can be is inaccurate and time consuming to design as it will requires the users to pre-map speed-torque characteristic of the load. By implementing "nudge control" in the speed control loop, it is possible to achieve the following results:

| ***No load condition*** | Discharge term only | New nudge term control |
|---|---|---|
| Ramp Error | 5% | 5% |
| Stead State Error | 1% | 0% |
| Responsive current control | Medium | Fast |

| ***8Nm load*** | Discharge term only | New nudge term control |
|---|---|---|
| Ramp Error | 10% | 5% |
| Stead State Error | 25% | 0% |
| Responsive current control | Medium | Fast |

As such, an architecture providing "nudge control" in the speed control loop enables improved dynamic speed response in the multi-channel drive configurations, minimized steady-state speed error of the paralleled multi-channel drives in all load conditions, and is very effective against the low-speed high-torque load condition. Furthermore, this is achieved whilst ensuring balanced current sharing between drives, and increasing robustness to communication failures. If the communication lines are down and the average Q-axis current demand is unavailable, the controller reverts back to be like a discharge-term architecture.

With such "nudge control" in the speed loop and/or the torque/current control loop (for example, in the configurations of any of Figures 2 to 4), it is possible that the controller does not perform optimally under dynamic configuration changes, such as increasing on-the-fly the number of active paralleled drives.

When more drives come online during the MCD operation (e.g. as instructed by the DSC, or other central controller), the DSC is configured to calculate a new average value for both the DQ voltage demands (referred to as Global D-axis and Q-axis voltage demands in Figures 3 and 4), immediately applying them to each drive. The initial voltage demands of the new drive are 0V. Therefore, the average Q-axis voltage for multiple drives becomes significantly lower than the previous value depending on the initial number of parallel drives. For instance, adding a second drive to a single initial drive will cause the voltage demand to drop by 50% (from V_{q_init} to (V_{q_init} + 0)/2). Adding a third drive to two initial drive will cause a voltage demand drop of 33% (from _{Vq_init} to (2V_{q_init} +0)/3).

If the reduced Q-axis voltage demand is lower than the motor's back EMF (BEMF), unintentional transition from motoring to regenerative mode can occur within the MCD. This problem becomes more pronounced at higher mechanical speeds, particularly in the field-weakening region, where the motor's BEMF voltage surpasses the DC-link voltage. The immediate regenerative effect may cause the DC-link voltage to overshoot, increasing system instability and posing a risk to the drive's power devices, which have limited tolerance to overvoltage conditions. The steady-state regenerative power could be controlled if a braking resistor unit is present on the DC bus. However, a basic MCD, such as the one shown in Figure 1, lacks a braking resistor unit. Therefore, the local drive controllers (e.g. motor drives 201, 202, 301, 302, 401, 402) should manage overvoltage levels and ensure safe operation.

The performance of an architecture, such as architecture 300, has been tested experimentally using the two-paralleled drives connected to a motor load similar to the MCD in Figure 1, demonstrating the problem that may exist during a configuration change from two paralleled drives (dual drive mode, or DD) to singledrive mode (SD) and vice versa. The experiment is conducted at the mechanical speed of 1krpm, 3krpm and 6krpm under torque-load condition of 5Nm which corresponds to the electrical power of about 500W, 1.5kW and 3kW, respectively. The internal signals of only one drive could be captured as the other drive was being set and reset to demonstrate the mode change.

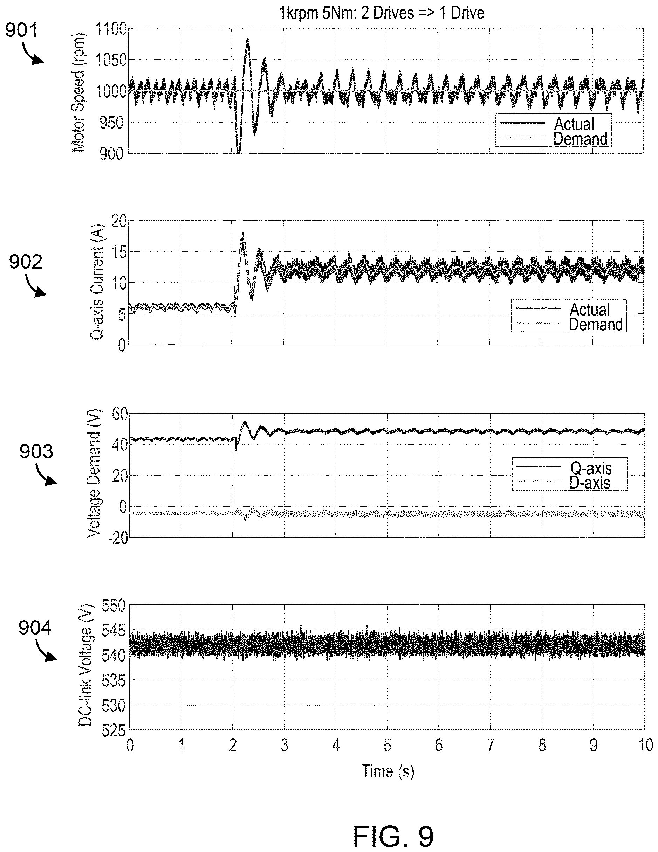

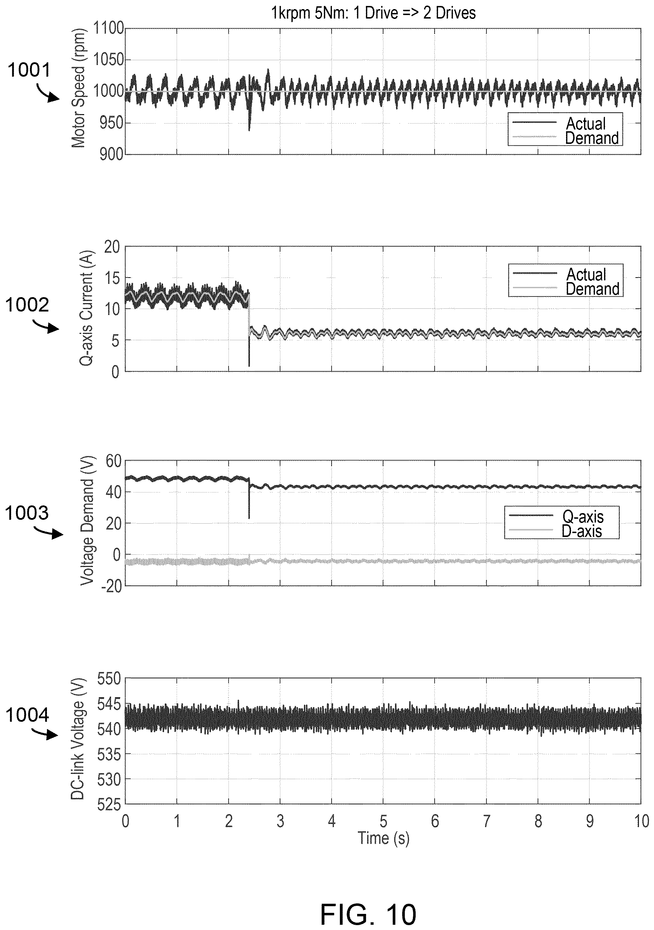

Figures 9 and 10 show the test results under 1krpm 5Nm. In Figure 9, there is a switch from two drives to one drive, and in Figure 10, there is a switch from one drive to two drives. As can be seen in plot 901 of Figure 9, there are +/-10% motor speed oscillations lasting for about 1 second during the mode transition from DD to SD mode, but only -5% oscillations lasting less than 1sec during the mode transition from SD to DD mode, as seen in plot 1001 of Figure 10.

As can be seen in plots 902 and 1002, each drive provides the motor Q-axis with about 6A of current in the DD mode. A single drive provides about 12A in the SD mode.

As illustrated in plots 903 and 1003, when observing the DQ-axis voltage demands, the Q-axis voltage demand increases from 43V to 50V (an increase of around 16%) when changing from the DD to SD mode and reduces back when the mode changes back. The D-axis voltage demand remains at the same level of around - 5V.

From plots 904 and 1004, there is no DC-link voltage overshoot during the DD-to-SD mode changes, because the voltage demands from the two drives are equal to each other and equal to the average voltage demand from DSC. However, as shown in plots 1002 and 1003 of Figure 10, during the mode changing from single-drive to dual-drive, there are dramatic drops in both the Q-axis voltage demand and Q-axis current response. At the low speed of 1000rpm, the Q-axis current does not decrease beyond 0A so the unintended regenerative operation is avoided.

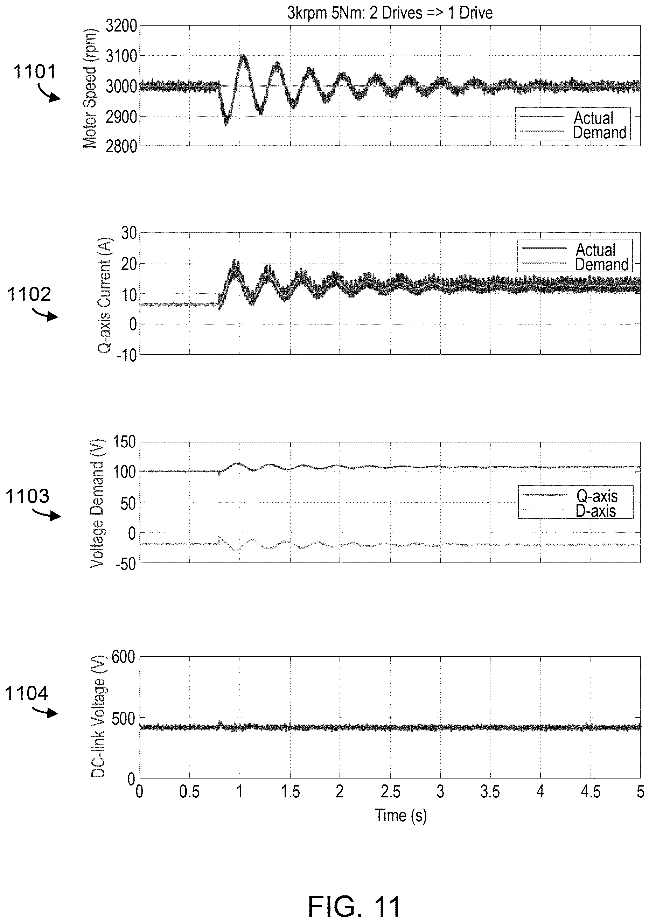

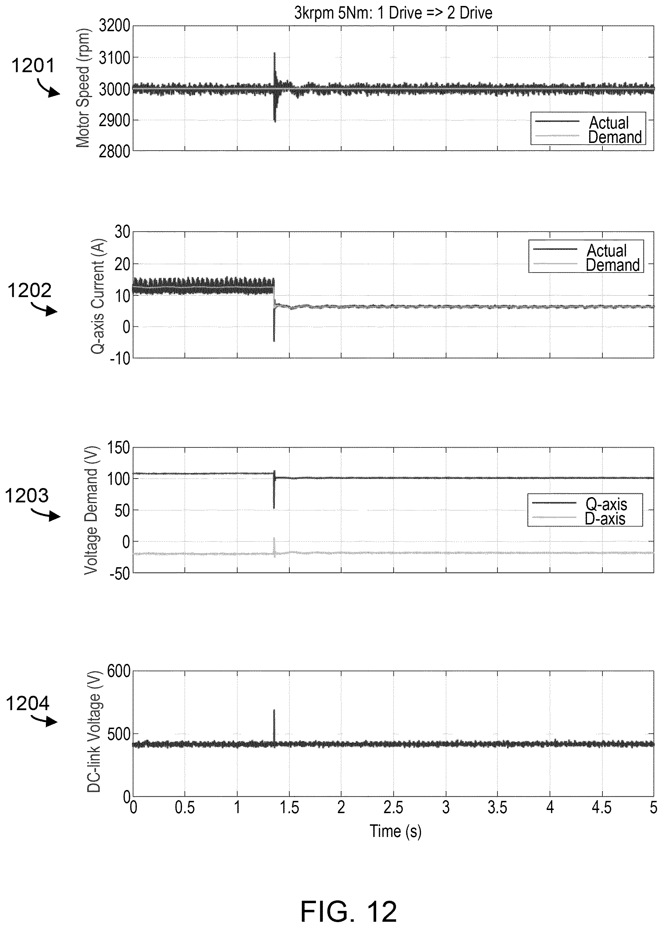

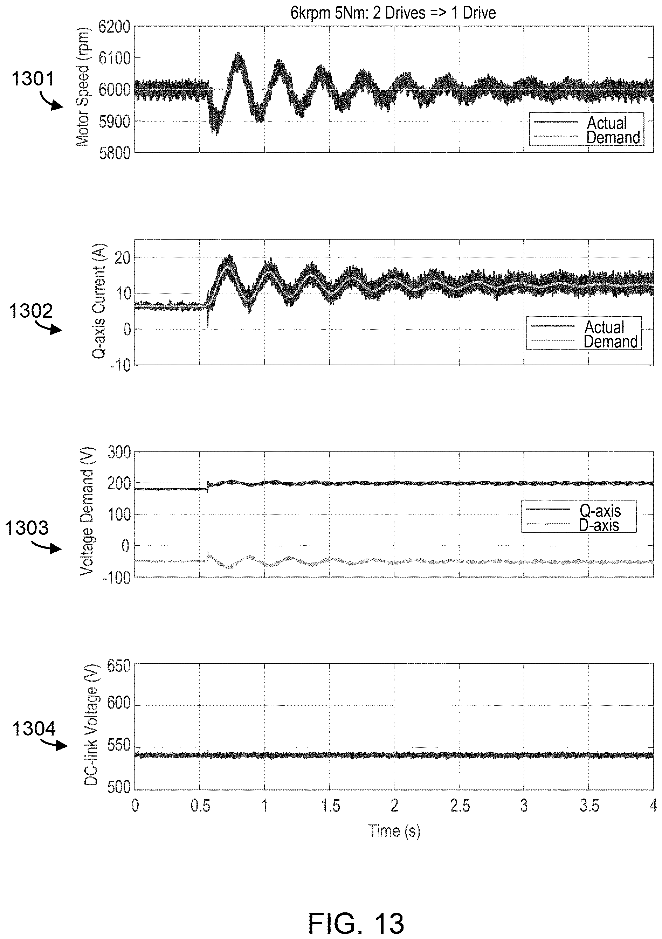

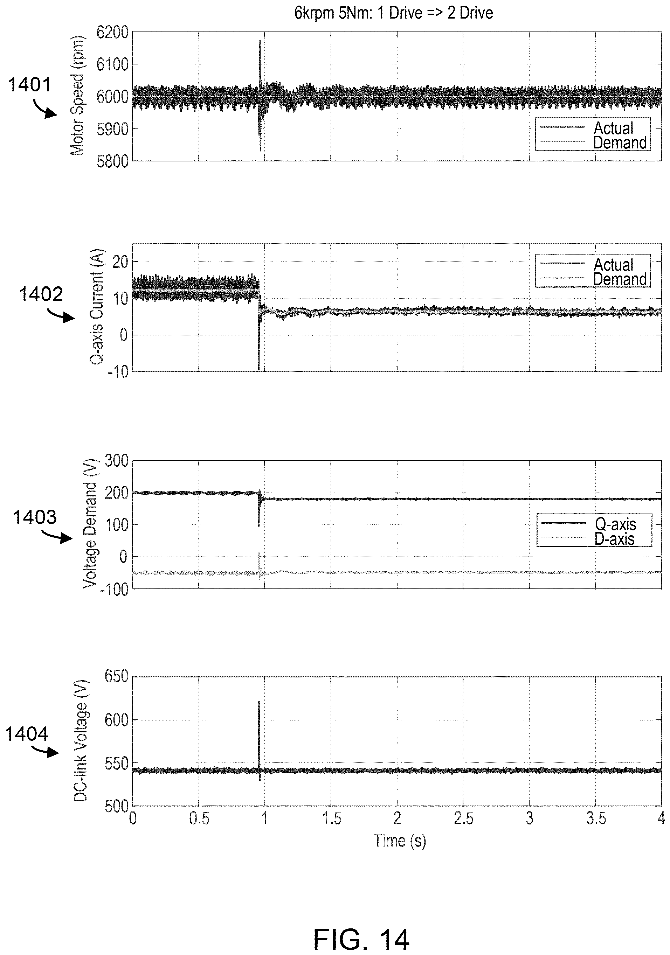

Figures 11 and 12 show similar test results under 3krpm, and Figures 13 and 14 show rest results at 6krpm. At both speed levels, as seen in plots 1101 and 1301, there is the +/-100rpm motor speed oscillation (+/- 3.3%) lasting for about 2 seconds during the mode transition from DD to SD mode and, as seen in plots 1201 and 1401, the same 3.3% oscillation lasting less than 1 second during the mode transition from SD to DD mode.

As the load torque is fixed at 5Nm, as seen in plots 1102, 1202, 1302, and 1402 the Q-axis current demand remains the same as the value recorded during corresponding tests performed at 1krpm / 5Nm. As seen in plots 1103, ,123, 1303 and 1403, the Q-axis voltage demand increases slightly from 100 to 107V (7%) at 3krpm and from 180V to 203V (12%) at 6krpm when changing from the DD to SD mode and reduces back when the mode changes back. The D-axis voltage demand oscillates during the mode transition but remains at the same level after (around - 18.6V for 3krpm and -50V for 6krpm).

However, as can be seen in plots 1204 and 1404, there are the DC-link voltage overshoots of about 30V for 3kprm (i.e. from 540V to 570V) and about 81V for 6kprm (i.e. from 540V to 621V) during the single-mode to dual-mode transition. The DC-link overshoots are in-line with the occurrences of the negative Q-axis current responses of -5A, for 3kprm (plot 1203) and -10A, for 6krpm (plot 1403).

In conclusion, the MCD suffers from the DC-link voltage overshoot problems when the number of electrically-paralleled drive channels is increased. Without the speed feedforward term, the voltage rating of the power devices must be increased which may lead to physically larger power converters.

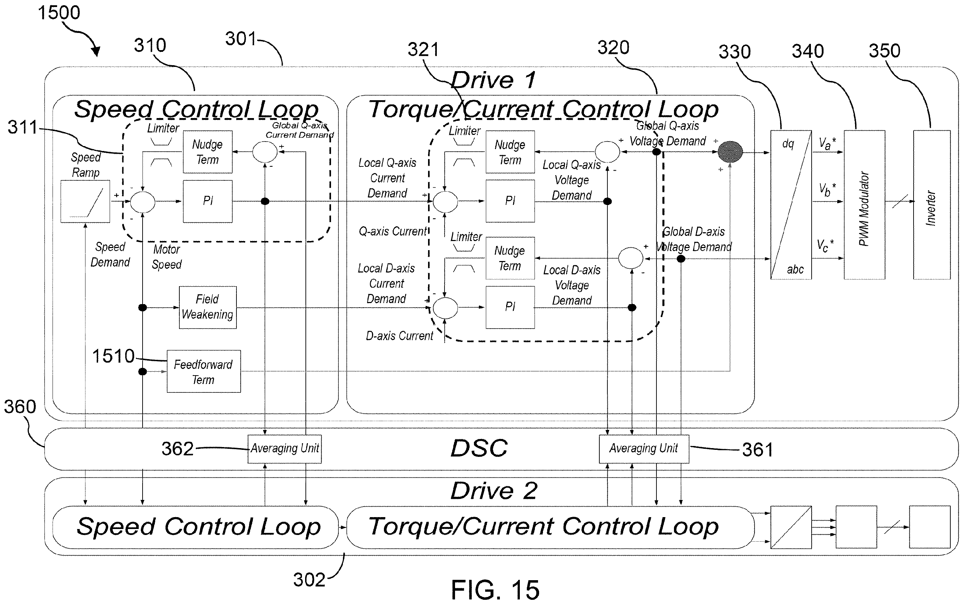

An architecture 1500 that can manage overvoltage levels may be seen in Figure 15. As can be seen, the architecture 1500 corresponds to the architecture 300 seen in Figure 3, with the addition of a feedforward voltage demand "feedforward term" 1510. As would be appreciated, a similar modification could be made to architectures 200 and 400, so as to improve MCD performance during configuration changes.

Such an architecture may further improve the MCD control performance during configuration changes by implementing the proportional feedforward voltage demand term, which is independent of the global D-axis and Q-axis voltage demands, and also independent of the "nudge-term" as seen in Figure 15, and/or independent of the discharge term, if implemented in an architecture using such control.

As can be seen, by utilising the feedforward term, the architecture 1500 calculates the total Q-axis voltage demand as the sum between the locally calculated feedforward term and the globally calculated (i.e. average of the local demands) Q voltage demand received from DSC 360. This solution stabilises the operation of the drives, when the number of active drives is increased on-the-fly during the MCD operation.

The feedforward term may be proportional to the mechanical motor speed and the associated gain may be set to be equal to motor back EMF gain, *Kₑ*. As a result, the total Q-axis voltage demand may then be the average or sum of the global demands from the DSC 360, and the local feedforward term. This voltage demand is then converted from the DQ domain to the ABC (i.e. three phase voltage) domain by conversion module 330, which may then be used as part of the modulation (e.g., to generate suitable modulation duty cycles using modulator 340). This is then used to generate the correct switching sequence of the motor drives 301, 302 (e.g., via the modulation technique or scheme) to facilitate this.

Again, such a feedforward term is applicable to two-level drives and multi-level drives because the feedforward term operates independently of the capacitor voltage balancing algorithm of a multi-level drive.

It will be appreciated by those skilled in the art that the disclosure has been illustrated by describing one or more specific examples, but is not limited to these examples; many variations and modifications are possible within the scope of the accompanying claims.

## Claims

1. A system for providing power to one or more loads, comprising
a central controller (360, 460) configured to output a speed demand for one or more loads; and
a plurality of power converters (301, 302, 401, 402) arranged in a parallel configuration with each other and configured to provide power to the one or more loads, each power converter (301, 302, 401, 402) comprising
a speed control loop (310, 410) configured to calculate a local current demand based at least in part on an output speed error between the speed demand of the one or more loads and a measured speed of the one or more loads;
a torque/current control loop (320, 420) configured to calculate an output voltage demand based at least in part on the local current demand of its respective speed control loop; and
a module (340) configured to modulate the output voltage of an inverter (350) based on the output voltage demand from the torque/current control loop.

2. The system of claim 1, wherein the central controller (360, 460) is configured to calculate a global current demand based upon the local current demands calculated by each of the power converters (301, 302, 401, 402), and transmit the global current demand to each of the power converters (301, 302, 401, 402), and
wherein each speed control loop is further configured to calculate its local current demand based at least in part on a proportional feedback signal of the global current demand.

3. The system of claim 2, wherein each torque/current control loop (420) is configured to calculate its output voltage demand based on the global current demand from the central controller (460).

4. The system of claim 2 or 3, wherein each local current demand comprises a local Q-axis current demand and a local D-axis current demand, and the global current demand comprises a global Q-axis current demand, and wherein the system is configured to calculate the local Q-axis current demand based at least in part on the output speed error between the speed demand of the one or more loads and the measured speed of the one or more loads, and the proportional feedback signal of the global Q-axis current demand.

5. The system of claim 4, wherein the system is configured to calculate each local D-axis current demand at least in part from the measured motor speed.

6. The system of claim 5, wherein the system is configured to calculate each local D-axis current demand in order to take into account field weakening.

7. The system of any of claims 4 to 6, wherein each output voltage demand comprises an output Q-axis voltage demand and an output D-axis voltage demand, the system being configured to calculate the output Q-axis voltage demand at least in part based on the respective local Q-axis current demand of its respective speed control loop, and the system being configured to calculate output D-axis voltage demand at least in part based on the respective local D-axis current demand of its respective speed control loop.

8. The system of claim 7, further comprising a module (330, 430) configured to convert the voltage demand from the DQ domain to a three phase voltage domain for the module (340) configured to modulate the output voltage of the inverter (350).

9. The system of any preceding claim, wherein the system is configured to calculate each output voltage demand further based on a feedforward term that is proportional to the measured speed of the one or more loads.

10. The system of claim 9, wherein the system is configured to scale the measured speed of the one or more loads is by an associated gain that is set equal to motor back EMF gain in order to provide the feedforward term.

11. The system of any preceding claim, wherein the central controller (360, 460) is configured to instruct one or more of the plurality of power converters (301, 302) to come online in order to meet the speed demand.

12. A method of providing power to one or more loads, the method comprising:
receiving a speed demand for the one or more loads,
calculating, by each of power converter of a plurality of power converters, a respective local current demand based at least in part on an output speed error between the speed demand of the one or more loads and a measured speed of the one or more loads;
calculating, by each of the power converters, a respective output voltage demand based at least in part on the respective local current demand; and
modulating, by each of the power converters, the output voltage of a respective inverter, based on the respective output voltage demand.

13. The method of claim 12, wherein each respective local current demand is calculated based at least in part on a proportional feedback signal of a global current demand, the global current being calculated based upon the local current demands.

14. The method of claim 12 or 13, wherein the respective output voltage demand is calculated based on a feedforward term that is proportional to the measured speed of the one or more loads.

15. The method of any of claims 12 to 14, comprising
instructing one or more further power converters to come online in order to meet the speed demand of the one or more loads.
